## Europäisches Patentamt
## European Patent Office
## Office européen des brevets

(19)

(11) Veröffentlichungsnummer: **0 174 576**
B1

(12) **EUROPÄISCHE PATENTSCHRIFT**

(45) Veröffentlichungstag der Patentschrift:
13.09.89

(51) Int. Cl.⁴: **C 08 C 19/02**

(21) Anmeldenummer: 85110994.2

(22) Anmeldetag: 31.08.85

E R R A T U M

(SEITE, SPALTE, ZEILE)
(PAGE, COLUMN, LINE)
(PAGE, COLONNE, LIGNE)

| DIE TEXTSTELLE : / TEXT PUBLISHED : / LE PASSAGE SUIVANT : | Seite | Spalte/Zeile | LAUTET BERICHTIGT: / SHOULD READ : / DEVRAIT ETRE LU : |
|---|---|---|---|
| FIG00/25 | 2 | 55/59 | $R_1 - \underset{R_3}{\overset{\phantom{}}{P}} - R_2$ und $R_1 - \underset{R_3}{\overset{\phantom{}}{As}} - R_2$ |
| FIG00/30 | 3 | 20/24 | $R_4 \diagdown \atop R_5 \diagup P - (CH_2)_m - P \diagup R_6 \atop \diagdown R_7$ |
| FIG00/30 | 3 | 32/39 | $Cp - (CH_2)_q - \underset{R_8}{\overset{\phantom{}}{P}} - (CH_2)_r - P \diagup R_9 \atop \diagdown R_{10}$ |
| ML 1 + 4 (100°C), [a] | 4 | 57 | ML 1 + 4 (100°C), [d] |
| 45,00 Gew.-% Teile Ruß N 550 / 1,50 Gew.-% Teile Triallylisocyanurat | 5 | 11/12 | 45,00 Gew.-% Teile Ruß N 550 / 1,50 Gew.-% Teile Triallylisocyanurat |
| sowie [(L₁) (L₂)] | 6 | 62 | sowie $[(L_1) (L_2) n]$ |

Tag der Entscheidung über die Berichtigung )
Date of decision on rectification: )   5.3.90
Date de décision portant sur modification: )

Ausgabe- und Veröffentlichungstag: )
Issue and publication date: )   23.5.90
Date d'édition et de publication: )

Patbl.Nr.)   90/21
EPB no:) ........
Bull. no:)

# Europäisches Patentamt

## European Patent Office

## Office européen des brevets

(19)

(11) Veröffentlichungsnummer: **0 174 576**
**B1**

(12) **EUROPÄISCHE PATENTSCHRIFT**

(45) Veröffentlichungstag der Patentschrift:
13.09.89

(51) Int. Cl.⁴: **C 08 C 19/02**

(21) Anmeldenummer: **85110994.2**

(22) Anmeldetag: **31.08.85**

(54) **Hydrierung nitrilgruppenhaltiger ungesättigter Polymerer.**

(30) Priorität: **12.09.84 DE 3433392**

(43) Veröffentlichungstag der Anmeldung:
**19.03.86 Patentblatt 86/12**

(45) Bekanntmachung des Hinweises auf die Patenterteilung:
**13.09.89 Patentblatt 89/37**

(84) Benannte Vertragsstaaten:
**DE FR GB IT**

(56) Entgegenhaltungen:
**DE-A-3 337 294**
**US-A-3 700 637**
**US-A-3 993 855**

(73) Patentinhaber: **BAYER AG, D-5090 Leverkusen 1**
**Bayerwerk (DE)**

(72) Erfinder: **Buding, Hartmuth, Dr.,**
**Liebermannstrasse 1, D-4047 Dormagen (DE)**
Erfinder: **Fiedler, Paul, Dr., Rybniker Strasse 8,**
**D-5000 Köln 80 (DE)**
Erfinder: **Königshofen, Heinrich, Dr., Am**
**Muehlenberg 26, D-5060 Bergisch- Gladbach 2 (DE)**
Erfinder: **Thörmer, Joachim, Dr., Emil- Nolde-**
**Strasse 39, D-5090 Leverkusen 1 (DE)**

**Beschreibung**

Die Erfindung betrifft ein Verfahren zum Hydrieren nitrilgruppenhaltiger ungesättigter Polymerer unter Erhalt der Nitrilgruppen.

Es ist aus US-A-3 700 637 bekannt, die CC-Doppelbindungen von Dien-(Meth)acrylnitrilcopolymeren mit großem Anteil an alternierenden Dien-Nitril-Einheiten homogen mit Rhodiumhalogenkomplexkatalysatoren in Chlorbenzol zu hydrieren. Die Eignung anderer Metalle wie Platin, Ruthenium, Iridium, Palladium, Rhenium, Kobalt oder Kupfer, homogen oder heterogen, wird angedeutet.

In der DE-A-2 539 132 wird eine lösungsmittelabhängige selektive Hydrierung von Butadien-Acrylnitrilcopolymeren mit dem vorbekannten Rhodiumkatalysator postuliert, bei der die CN-Dreifach- und cis-Doppelbindungen erhalten bleiben und die vinylischen und trans-Doppelbindungen quantitativ hydriert werden, wenn Chlorbenzol als Lösungsmittel verwendet wird. In anderen Lösungsmitteln, insbesondere Ketonen, werden nur niedrige Hydriergrade erzielt.

Aus der DE-A-2 459 115 schließlich ist es bekannt, ungesättigte Polyhydroxykohlenwasserstoffe mit Molgewichten bis zu 4000 unter Erhalt der Hydroxylgruppen mit Hilfe von Rutheniumkatalysatoren homogen oder vorzugsweise heterogen zu hydrieren. Als Lösungsmittel für die heterogene Hydrierung kommen aliphatische Kohlenwasserstoffe, aromatische Kohlenwasserstoffe, Alkohole, Ether, Ester und Wasser in Frage; für die homogene Hydrierung werden keine Angaben gemacht. Die Polymeren sollen auch z. B. Acrylnitril als Comonomer enthalten können, detaillierte Beschreibungen werden nicht gemacht, jedoch ist zu berücksichtigen, daß aus US-A-3 454 644, Beispiel IX, bekannt ist, daß die Nitrilgruppe von Benzonitril in homogener Ru-Katalyse in Ethanol zur Aminogruppe hydriert wird.

Eigene Versuche an Butadien-Acrylnitrilcopolymeren zeigen, daß mit entsprechenden Rutheniumkomplexkatalysatoren in Chlorbenzol, welches nach Stand der Technik ein geeignetes Lösungsmittel für die Hydrierung von ungesättigten nitrilgruppenhaltigen Polymeren mit Rhodiumkomplexkatalysatoren ist, stark vergelte Produkte erhalten werden.

Da die Rhodiumvorkommen sehr klein und Rhodium nicht nur in der chemischen Industrie, sondern überwiegend in der Elektroindustrie, in der Glas- und Keramikindustrie und in jüngster Zeit ganz besonders in der Automobilindustrie (Abgaskatalysatoren) eingesetzt wird, ist eine Verknappung dieses Edelmetalls in Zukunft nicht auszuschließen.

Aufgabe der vorliegenden Erfindung war es, ein neues, rhodiumunabhängiges, homogenes Hydrierverfahren für nitrilgruppenhaltige ungesättigte Polymere beliebiger Struktur unter Erhalt der Nitrilgruppen bereit zu stellen, mit dem gewünschtenfalls eine quantitative Hydrierung aller CC-Doppelbindungen erreicht wird und das zu Kautschuken mit hervorragenden Gebrauchseigenschaften führt.

Die Aufgabe wurde durch homogene Reaktionsführung unter Verwendung spezieller Rutheniumkatalysatoren in speziellen Lösungsmitteln überraschenderweise gelöst.

Gegenstand der Erfindung ist daher die Hydrierung nitrilgruppenhaltiger Polymerer in homogener Phase, unter Erhalt der Nitrilgruppen, dadurch gekennzeichnet, daß als Lösungsmittel ein niedermolekulares Keton und als Katalysator eine Verbindung der Formel

$$RuX\,[(L_1)\,(L_2)_n]$$

verwendet wird, wobei

X       Wasserstoff, Halogen,
$L_1$       Wasserstoff, Halogen, gegebenenfalls substituiertes Cyclopentadienyl,
$L_2$       ein Phosphan, Bisphosphan oder Arsan und
n       1, 2 oder 3 sowie
$[(L_1)\,(L_2)_n]$ ein Cyclopentadienyl-Bisphosphan bedeuten.

X bedeutet vorzugsweise Chlor; $L_1$ Wasserstoff oder Chlor und $L_2$ ein Triarylphosphan.
Beispiele für $L_1$-Liganden sind Cyclopentadienyl, Pentamethylcyclopentadienyl, Ethyltetramethylcyclopentadienyl, Pentaphenylcyclopentadienyl und Dimethyltriphenylcyclopentadienyl. Bevorzugte $L_1$-Ligangen sind Chlor und Cyclopentadienyl.
Beispiele für $L_2$-Liganden sind solche, die den Formeln

FIG00/25

entsprechen, in denen $R_1$, $R_2$ und $R_3$ gleich oder verschieden sein können und Alkyl-, Cycloalkyl-, Aryl- oder Aralkylreste bedeuten, wobei diese Reste gegebenenfalls durch Alkyl-, Hydroxy-, Alkoxy-, Carbalkoxy- oder Halogengruppen substituiert sein können.
Alkylreste sind hier beispielsweise geradkettige oder verzweigte, gesättigte Kohlenwasserstoffreste mit 1 bis 20, bevorzugt 1 bis 12, besonders bevorzugt 1 bis 6 C - Atomen.

2

Cycloalkylreste sind beispielsweise cyclische, gesättigte Kohlenwasserstoffreste mit 5 bis 12, bevorzugt 5 bis 7 C - Atomen.

Arylreste sind beispielsweise aromatische Kohlenwasserstoffreste aus der Benzolreihe mit 6 bis 18, bevorzugt 6 bis 12 C - Atomen.

Aralkylreste sind beispielsweise durch Aryl substituierte Alkylreste, die im aliphatischen Teil aus einem geradkettigen oder verzweigten Kohlenwasserstoffrest mit 1 bis 6 C - Atomen und im aromatischen Teil aus einem Rest der Benzolreihe, vorzugsweise Phenyl, bestehen.

Die vorstehend erläuterten Alkyl-, Cycloalkyl-, Aryl- und Aralkylreste können gegebenenfalls durch $C_1$- bis $C_6$-Alkyl, Hydroxy, $C_1$- bis C-Alkoxy, $C_1$- bis $C_6$-Carbalkoxy, Fluor oder Chlor substituiert sein.

Bevorzugte $L_2$-Liganden sind Triphenylphosphan, Diethylphenylphosphan, Tritolylphosphan, Trinaphthylphosphan, Diphenylmethylphosphan, Diphenylbutylphosphan, Tris-(p-carbmethoxyphenyl) -phosphan, Tris-(p-cyanophenyl)-phosphan, Tributylphosphan, Tris-(trimethoxyphenyl)-phosphane, Bis-(trimethylphenyl)-phenylphosphane, Bis-(trimethoxyphenyl)-phenylphosphane, Trimethylphenyl-diphenylphosphane, Trimethoxyphenyldiphenylphosphane, Tris-(dimethylphenyl)-phenylphosphane, Tris-(dimethoxyphenyl)-phosphane, Bis-(dimethylphenyl)-phenylphosphane, Bis-(dimethoxyphenyl)-phenylphosphane, Dimethylphenyldiphenylphosphane, Dimethoxyphenyldiphenylphosphane, Triphenylarsan, Ditolylphenylarsan, Tris-(4-ethoxyphenyl)-arsan, Diphenylcyclohexylarsan, Dibutylphenylarsan und Diethylphenylarsan.

Weitere Beispiele für $L_2$-Liganden sind Bisphosphane der Formel

FIG00/30

in der m für eine ganze Zahl von 1 bis 10 steht und die Reste $R_4$, $R_5$, $R_6$, $R_7$ gleich oder verschieden sein können und die Bedeutung von $R_1$ haben.

Beispiele für Bisphosphane sind 1,2-Bis-diphenylphosphanoethan, 1,2-Bis-dianisylphosphanoethan, bevorzugt 1,3-Bis-diphenylphosphanopropan und insbesondere 1,4-Bis-diphenylphosphanobutan.

Beispiele für $[(L_1)(L_2)_n]$ -Liganden sind Verbindungen der Formel

FIG00/30

Cp: Cyclopentadienyl

worin q und r gleich oder verschieden sind und eine ganze Zahl von 1 bis 6 bedeuten und die Reste $R_8$, $R_9$ und $R_{10}$ gleich oder verschieden sind und die Bedeutung von $R_1$ haben.

Beispiele solcher Liganden sind 1,4-Diphospha-6-cyclo-pentadienyl-1,1,4-triphenylhexan, bevorzugt 1,5-Diphospha -7-cyclopentadienyl-1,1,5-triphenylheptan und insbesondere 1,6-Diphospha-8-cyclopentadienyl-1,1,6-triphe-nyloctan.

Die verwendeten Rutheniumkomplexe sind bekannt (s. M.I. Bruce, N.J. Windsor, Aust. J. Chem. 30 (1977), Seiten 1601 bis 1604 und T. Kauffmann, J. Olbrich, Tetrahedron Letters 25 (1984), Seiten 1967 - 1970) und können beispielsweise durch Umsetzung von hydratisiertem Rutheniumtrichlorid mit einem Überschuß der Liganden $L_1$ und $L_2$ in Ethanol erhalten werden.

Rutheniumkomplexe mit X = Brom oder Jod können z. B. durch einfaches Erhitzen der entsprechenden Rutheniumkomplexe der Formel mit X = Wasserstoff mit HBr oder HJ in Methanol gewonnen werden (s. T. Wilczewsky, M. Bochenska, J.F. Biernat in J. Organomet. Chem. 215 (1981), Seiten 87 bis 96).

Als Lösungsmittel für die Hydrierung kommen insbesondere Aceton, Butanon, Pentanone, Cyclopentanon und Cyclohexanon in Frage.

Sowohl die ungesättigten als auch die hydrierten Polymeren sollen im verwendeten Lösungsmittel löslich sein.

Das Verfahren eignet sich zur Hydrierung von Copolymeren aus 85 bis 50 Gew.-%, bevorzugt 82 bis 55 Gew.-% zumindest einem konjugierten Dien, 15 bis 50 Gew.-%, vorzugsweise 18 bis 45 Gew.-% zumindest einem ungesättigten Nitril und 0 bis 10 Gew.-%, bevorzugt 0 bis 8 Gew.-% zumindest einem weiteren mit konjugierten Dienen und ungesättigten Nitrilen copolymerisierbaren Monomeren.

Als konjugierte Diene kommen z. B. Butadien-1,3, 2-Methylbutadien-1,3, 2,3-Dimethylbutadien-1,3 und Pentadien-1,3, als ungesättigte Nitrile Acrylnitril und Methacrylnitril in Frage.

Als weitere Monomere kommen Vinylaromaten wie Styrol, o-, m- oder p-Methylstyrol, Ethylstyrol, Vinylnaphthalin und Vinylpyridin, α, β-ungesättigte Monocarbonsäuren mit 3 bis 5 C - Atomen wie Acrylsäure, Methacrylsäure und Crotonsäure sowie α, β-ungesättigte Dicarbonsäuren mit 4 bis 5 C - Atomen wie Malein-, Fumar-, Citracon- und Itakonsäure, ferner Vinylchlorid, Vinylidenchlorid, N-Methylolacrylamid und Vinylalkylether mit 1 bis 4 C - Atomen im Alkylteil in Betracht.

Vorzugsweise wird ein binäres Copolymer aus Butadien und Acrylnitril hydriert.

Das Molekulargewicht der Polymeren ist nicht kritisch und liegt zwischen 500 und 500 000 g/mol, bevorzugt zwischen 1000 und 200 000 g/mol und insbesondere zwischen 30 000 und 150 000 g/mol (Zahlenmittel, ermittelt durch Gelpermeationschromatographie).

Die Hydriergrade (Prozentsatz der hydrierten CC-Doppelbindungen bezogen auf die Gesamtzahl der ursprünglich im Polymer vorhandenen CC-Doppelbindungen) können bis 100 % betragen. Die Hydrierung kann jedoch erforderlichenfalls vorher abgebrochen werden. Bevorzugt werden Polymerisate mit Hydriergraden von über 80 %, insbesondere von über 90 %, vorzugsweise von über 95 % und ganz besonders bevorzugt von über 99 % nach dem erfindungsgemäßen Verfahren erhalten.

Die Konzentration an Katalysator, bezogen auf Polymer (berechnet als Ruthenium), beträgt 10 bis 1000, vorzugsweise 40 bis 600 ppm. Die Konzentration an ungesättigtem Polymer, bezogen auf die Gesamtlösung, beträgt 1 bis 99, vorzugsweise 5 bis 40 Gew.-%.

Die Hydrierung wird zweckmäßigerweise bei 80 bis 200°C, vorzugsweise bei 100 bis 180°C, insbesondere bei 120 bis 160°C und 20 bis 350 bar, vorzugsweise bei 30 bis 250 bar Wasserstoffdruck durchgeführt.

Nach der Hydrierung wird das Polymer mit Hilfe üblicher Methoden aus der Lösung abgetrennt, z. B. durch (Vakuum)eindampfen, durch Einblasen von Wasserdampf oder durch Zugabe eines Nichtlösungsmittels. Zur Entfernung von Restlösungsmittel oder Wasser schließt sich eine Trocknung an.

Hydriert man Dien-(Meth)acrylnitrilcopolymere nach dem Stand der Technik in Chlorbenzol mit Rhodiumkomplexkatalysatoren und arbeitet man die Reaktionslösungen zur Gewinnung der festen Polymere durch Einblasen von Wasserdampf auf, so scheiden sich an Wandung und Rührer des Strippers dicke Polymerfladen ab, was ein periodisches Öffnen des Strippers zur mechanischen Reinigung erfordert. Weiterhin verkleben die ausgetragenen feuchten Polymerkrümel das Wasserabtropfsieb innerhalb kurzer Zeit, so daß eine ständige Reinigung des Siebes durchgeführt werden muß.

Es wurde überraschend gefunden, daß sich die nach dem erfindungsgemäßen Verfahren erhaltenen Polymerlösungen durch Einblasen von Wasserdampf zur Gewinnung des festen Polymeren problemlos ohne Verkleben der Stripperwand, des -rührers und des -abtropfsiebes aufarbeiten lassen und daß auch nach Beendigung der Aufarbeitung eine mechanische Reinigung des Strippers nicht erforderlich ist.

Die erfindungsgemäß hydrierten Polymere werden in üblicher Weise durch eine Peroxyd- oder Schwefelvulkanisation gehärtet, sofern die Vulkanisation nicht durch eine Strahlenvernetzung durchgeführt wird.

Aufgrund ihrer ausgezeichneten Wetter-, Ozon-, Öl- und Heißluftbeständigkeit, sowie Beständigkeit gegenüber kaltem Klima können diese Polymere für hochwertige Gummiartikel, wie Dichtungen, Schläuche, Membranen, für Kabelisolationen und -mäntel eingesetzt werden.

Beispiel 1

Eine sorgfältig mit Stickstoff gespülte Lösung von 220 g eines statistischen Butadien-Acrylnitrilcopolymers mit 34,9 Gew.-% Acrylnitril und einer Mooney-Viskosität ML 1 + 4 (100°C) von 29 in 1980 g Chlorbenzol wurde unter Stickstoffspülung in einem 3 l-Autoklav vorgelegt. Unter weiterer Inertisierung gab man eine ebenfalls mit Stickstoff gespülte Lösung von 0,385 g Tris(triphenylphosphan)-ruthenium-II-chlorid und 2,0 g Triphenylphosphan in 55 g Chlorbenzol zu und drückte 80 bar Wasserstoff auf. Man heizte bis 130°C auf und setzte dann die Reaktion bei 140 bar Wasserstoffdruck 4 Stunden bei 130°C fort.

Als Reaktionsprodukt wurde eine zähe, geschäumte, plastische, mit Lösungsmittel gequollene Masse erhalten, die sich weder durch weitere Zugabe von Chlorbenzol noch durch Hinzufügen von Butanon lösen ließ.

Beispiel 2

Eine sorgfältig entgaste Lösung von 2,1 kg des gleichen Polymers wie in Beispiel 1 in 17,9 kg Butanon wurde in einem mit Stickstoff intertisierten 40 l-Autoklav vorgelegt. Man heizte auf 150°C auf, fügte eine sorgfältig entgaste Lösung von 3,327 g Tris(triphenylphosphan)-ruthenium-II-chlorid in 1,6 kg Butanon hinzu und hydrierte 4 Stunden bei 140 bar Wasserstoffdruck. Das Butanon wurde durch Einblasen von Wasserdampf entfernt und das Polymer im Vakuum getrocknet.

Analog wurden weitere Polymere bei verschiedenen Reaktionstemperaturen hergestellt. In Tabelle 1 sind die Polymerdaten (I) in Abhängigkeit von der Reaktionstemperatur (°C) wiedergegeben, wobei [a] den Hydriergrad (%, infrarotspektroskopisch bestimmt), [b] den Gelwert (%, gemessen in Butanon), [c] die Mooney-Viskosität ML 1 + 4 (100°C), [a] die Defo-Viskosität $V_{10}$ (N. s, 80°C) (R. Koopmann, Kautschuk + Gummi, Kunststoffe 36, Nr. 2, S. 108 ff (1983)), [e] die Defo-Elastizität $DE_{30}$ (1/10 mm, 80°C) (s. Lit. wie unter [d] und [f] die Mooney-Relaxation MR (%, 100°C) (R. Koopmann, H. Kramer, J. of Testing and Evaluation Vol. 12, Nr. 6, Nov. 1984; vorgetragen auf dem ASTM-Symposium über "Processibility and Rheology of Rubber" in Toronto am 21. Juni 1982) bedeuten. Zur Messung der Mooney-Viskosität ML wurden 150 g Polymer auf einem 450 mm breiten Laborwalzwerk (Kühlwassertemperatur 20°C, Walzenspalt 0,4 mm, Friktion 1 : 1,2, vordere Walze 20 U/min) zweimal durchgelassen. Nach Ablagerung des Felles für mindestens 30 Minuten erfolgte die weitere Prüfung nach DIN 53 523, Teil 2 und 3. Die Mooney-Relaxation wurde mit dem Rest der Defo-Klappe (s. Lit. zu /d/) gemessen.

4

Beispiel 3
Aus den Polymere, hergestellt nach Beispiel 2, wurden gemäß folgender Rezeptur Mischungen hergestellt:

| | |
|---|---|
| 100,00 | Gew.-% Teile hydriertes Polymer |
| 2,00 | Gew.-% Teile Zinkoxid |
| 2,00 | Gew.-% Teile Magnesiumoxid |
| 1,00 | Gew.-% Teile styrolisiertes Diphenylamin |
| 0,40 | Gew.-% Teile Zinksalz des 2-Mercaptobenzimidazols |
| 45,00 | Gew.-% Teile Ruß N 550 |
| 1,50 | |
| | Gew.-% Teile Triallylisocyanurat |
| 7,00 | Gew.-% Teile Bis (tertiärbutylperoxyisopropyl)-benzol |

In Tabelle 1 sind die in Abhängigkeit von der Hydriertemperatur ermittelten Werte der Vulkanisate (II) aufgelistet. Die Vulkanisation wurde 15 Minuten bei 180°C durchgeführt. Anschließend erfolgte eine Temperung während 6 Stunden bei 150°C. Als Prüfkörper kam der S2-Stab zum Einsatz.

Für die Messungen wurden in diesem und im Beispiel 5 die Normen DIN 53 504, 53 505, 53 512 und 53 517 (Normprobekörper A) verwendet, wobei F die Zugfestigkeit, D die Bruchdehnung, $M_{100}$ bzw. $M_{200}$ den Spannungswert bei 100 bzw. 200 % Dehnung, $H_{23}$ die Härte Shore A bei 23°C, $E_{23}$ die Rückparallelelastizität bei 23°C und DVR den Druckverformungsrest bei 150°C/70h bedeuten.

Beispiel 4
Entsprechend Beispiel 2 wurde bei 140°C und 140 bar Wasserstoffdruck mit unterschiedlichen Mengen an Tris(triphenylphosphan)-ruthenium-II-chlorid 4 Stunden hydriert.

Die Tabelle 2 gibt die Polymerdaten (I) in Abhängigkeit von der eingesetzten Ruthenium-Konzentration (ppm, bezogen auf Polymer) wieder.

Beispiel 5
Entsprechend Beispiel 3 wurden aus den Polymeren gemäß Beispiel 4 Mischungen hergestellt und verarbeitet.

In Tabelle 2 sind die Vulkanisateigenschaften (II) in Abhängigkeit von der Ruthenium-Konzentration (ppm, bezogen auf Polymer) aufgelistet.

**Tabelle 1**

| Reaktionstemperatur | 150 | 140 | 135 | 130 |
|---|---|---|---|---|
| (I) | | | | |
| [a] | 99,1 | 98,7 | 99,8 | 99,7 |
| [b] | 1,7 | 1,4 | 2,3 | 2,3 |
| [c] | 80 | 86 | 102 | 98 |
| [d] | 190,1 | 223,8 | 315,4 | 301,2 |
| [e] | 33,7 | 37,0 | 44,3 | 42,4 |
| [f] | 9,7 | 12,4 | 19,7 | 18,1 |
| (II) | | | | |
| F [MPa] | 24,8 | 25,1 | 27,1 | 26,1 |
| D [%] | 285 | 255 | 300 | 295 |
| $M_{100}$ [MPa] | 5,2 | 6,2 | 5,5 | 5,3 |
| $M_{200}$ [MPa] | 16,3 | 19,1 | 17,8 | 17,0 |
| $H_{23}$ [-] | 71 | 72 | 70 | 72 |
| $E_{23}$ [%] | 38 | 38 | 37 | 39 |
| DVR [%] | 47,3 | 42,5 | 43,1 | 47,2 |

**Tabelle 2**

| Ru-Konzentration | 300 | 167 | 100 | 75 |
|---|---|---|---|---|
| (I) | | | | |
| [a] | 97,4 | 98,7 | 98,0 | 94,2 |
| [b] | 1,5 | 1,4 | 1,7 | 2,5 |
| [c] | 90 | 86 | 78 | 76 |
| [d] | 288,6 | 223,8 | 184,2 | 191,5 |
| [e] | 39,8 | 37,0 | 34,8 | 34,6 |
| [f] | 18,9 | 12,4 | 9,4 | 9,0 |

5

(II)

| | | | | |
|---|---|---|---|---|
| F [MPa] | 26,8 | 25,1 | 25,7 | 25,1 |
| D [%] | 260 | 255 | 300 | 300 |
| $M_{100}$ [MPa] | 7,7 | 6,2 | 5,3 | 5,3 |
| $M_{200}$ [MPa] | 20,9 | 19,1 | 16,7 | 16,4 |
| $H_{23}$ [-] | 73 | 72 | 71 | 72 |
| $E_{23}$ [%] | 39 | 38 | 37 | 38 |
| DVR [%] | 43,3 | 42,5 | 39,8 | 40,9 |

Beispiel 6

Entsprechend Beispiel 2 wurde die Polymerlösung in den mit Stickstoff inertisierten 40 l-Autoklav vorgelegt. Bei 125°C und 25 bar Wasserstoffdruck fügte man die Katalysatorlösung zu und setzte die Hydrierung 4 Stunden bei 135°C und 140 bar Wasserstoffdruck fort.

Es wurden folgende Polymerdaten gefunden:

| [a] | [b] | [c] | [d] | [e] | [f] |
|---|---|---|---|---|---|
| 98,7 | 1,1 | 90 | 270,4 | 41,0 | 15,9 |

Beispeil 7

Entsprechend Beispiel 2 wurde ein statistisches Butadien-Acrylnitrilcopolymer mit 37,6 Gew.-% Acrylnitrilgehalt und einer Mooney-Viskosität ML 1 + 4 (100°C) von 34 bei 135°C hydriert.

Folgende Polymerdaten wurden erhalten:

| [a] | [b] | [c] | [d] | [e] | [f] |
|---|---|---|---|---|---|
| 99,6 | 1,3 | 105 | 283 | 41,7 | 15,2 |

Beispiel 8

Eine sorgfältig entgaste Lösung von 2,1 kg des gleichen Polymers wie in Beispiel 1 in 17,9 kg Aceton wurde in einem mit Stickstoff inertisierten 40 l-Autoklav vorgelegt. Man heizte auf 135°C auf, fügte eine sorgfältig entgaste Lösung von 5.977 g Tris(triphenylphosphan)-ruthenium-II-chlorid in 1,6 kg Aceton hinzu und hydrierte 2 Stunden bei 140 bar Wasserstoffdruck.

Es wurden folgende Polymerdaten gefunden:

| [a] | [b] | [c] | [d] | [e] | [f] |
|---|---|---|---|---|---|
| 99,5 | 1,6 | 98 | 323 | 45,5 | 20,5 |

**Patentansprüche**

1. Verfahren zur Hydrierung nitrilgruppenhaltiger ungesättigter Polymerer in homogener Phase unter Erhalt der Nitrilgruppen, dadurch gekennzeichnet, daß als Lösungsmittel ein niedermolekulares Keton und als Katalysator eine Verbindung der Formel

$RuX [(L_1) (L_2)_n]$

verwendet wird, wobei

X      Wasserstoff, Halogen,
$L_1$      Wasserstoff, Halogen, gegebenenfalls substituiertes Cyclopentadienyl,
$L_2$      ein Phosphan, Bisphosphan oder Arsan und
n      1, 2 oder 3,

sowie $[(L_1) (L_2)]$ ein Cyclopentadienyl-Bisphosphan bedeuten.

2. Verfahren nach Anspruch 1, wobei X Chlor, $L_1$ Wasserstoff oder Chlor und $L_2$ ein Triarylphosphan bedeuten.

3. Verfahren nach Anspruch 1, wobei X Wasserstoff oder Chlor, $L_1$ Cyclopentadienyl und $L_2$ Triarylphosphan

6

bedeuten.

4. Verfahren nach Anspruch 1, dadurch gekennzeichnet, daß Hydriergrade von 80 bis 100 % erzielt werden.

5. Verfahren nach Anspruch 1, dadurch gekennzeichnet, daß man bei 80 bis 200°C und 20 bis 350 bar Wasserstoffdruck mit einer Katalysatorkonzentration, bezogen auf Polymer, berechnet als Ruthenium, von 20 bis 1000 ppm hydriert.

## Claims

1. A process for the hydrogenation of unsaturated polymers containing nitrile groups in a homogeneous phase while retaining the nitrile groups, characterised in that the solvent used is a low molecular weight ketone and the catalyst used is a compound corresponding to the following formula:

$RuX [(L_1) (L_2)_n]$
in which

X       denotes hydrogen or halogen,
$L_1$       denotes hydrogen, halogen or optionally substituted cyclopentadienyl,
$L_2$       denotes a phosphane, bis-phosphane or arsane and
n       denotes 1, 2 or 3,
and $[(L_1) (L_2)_n]$ denotes a cyclopentadienyl-bisphosphane.

2. Process according to claim 1, in which X denotes chlorine, $L_1$ denotes hydrogen or chlorine and $L_2$ denotes a triarylphosphane.

3. Process according to claim 1, in which X denotes hydrogen or chlorine, $L_1$ denotes cyclopentadienyl and $L_2$ denotes triarylphosphane.

4. Process according to claim 1, characterised in that degrees of hydrogenation of from 80 to 100 % are achieved.

5. Process according to claim 1, characterised in that hydrogenation is carried out at 80 to 200°C and at a hydrogen pressure of 20 to 350 bar at a catalyst concentration, based on the polymer, of from 20 to 1,000 ppm, calculated as ruthenium.

## Revendications

1. Procédé pour hydrogéner en phase homogène des polymères insaturés contenant des groupes nitriles, avec conservation des groupes nitriles, procédé caractérisé en ce que on utilise comme solvant une cétone à bas poids moléculaire et, comme catalyseur, un composé de formule

$RuX [(L_1) (L_2)_n]$
dans laquelle

X       représente un atome d'hydrogène ou d'halogène,
$L_1$       représente un atome d'hydrogène ou d'halogène ou un groupe cyclopentadiényle éventuellement substitué,
$L_2$       représente un phosphane, un bisphosphane ou un arsane, et
n       vaut 1, 2 ou 3, et
$[(L_1) (L_2)_n]$ représente un ensemble cyclopentadiényl-bisphosphane.

2. Procédé selon la revendication 1, dans lequel X représente du chlore, $L_1$ un atome d'hydrogène ou de chlore et $L_2$ un triarylphosphane.

3. Procédé selon la revendication 1, dans lequel X représente un atome d'hydrogène ou de chlore, $L_1$ représente un groupe cyclopentadiényle et $L_2$ un groupe triaryl-phosphane.

4. Procédé selon la revendication 1, caractérisé en ce que l'on obtient des degrés d'hydrogénation de 80 à 100 %.

5. Procédé selon la revendication 1, caractérisé en ce qu'on effectue l'hydrogénation entre 80 et 200°C et sous une pression d'hydrogène de 20 à 350 bar, avec une concentration en catalyseur sur la base du polymère, calculée en ruthénium, de 20 à 1000 ppm.